# FASCICULE DE BREVET EUROPEEN

(11) **EP 2 878 129 B1**
(45) Date de publication et mention de la délivrance du brevet: **07.06.2023**
(21) Numéro de dépôt: 13773370.5
(22) Date de dépôt: 23.07.2013
(51) Int. Cl.: H04N 13/305, H04N 13/31, H04N 13/317, H04N 13/351, G02B 30/29, H04N 13/398

(54) **PROCÉDÉ D'AFFICHAGE AUTO-STÉRÉOSCOPIQUE SUR UN ÉCRAN AYANT SA PLUS GRANDE DIMENSION DANS LE SENS VERTICAL**
VERFAHREN ZUR AUTOSTEREOSKOPISCHEN ANZEIGE AUF EINEM BILDSCHIRM MIT EINER GRÖSSEREN GRÖSSE IN VERTIKALER RICHTUNG
METHOD FOR AUTOSTEREOSCOPIC DISPLAY ON A SCREEN HAVING THE LARGER SIZE THEREOF IN THE VERTICAL DIRECTION

(30) Priorité: 24.07.2012 FR 1257189
(43) Date de publication de la demande: 03.06.2015
(73) Titulaire: Alioscopy, 75020 Paris (FR)
(72) Inventeur: ALLIO, Pierre, 75020 Paris (FR); MARCELLIER, Gilles, 75010 Paris (FR); HIRSCH, Nicolas, 75020 Paris (FR)
(74) Mandataire: Bringer, Mathieu
(86) Numéro de dépôt international: PCT/IB2013/056032
(87) Numéro de publication internationale: WO 2014/016768

(56) Documents cités:
- EP-A2- 0 625 861
- EP-A2- 0 829 743
- WO-A1-2012/073795
- GB-A- 2 418 315
- US-A1- 2010 259 697
- US-A1- 2011 157 323

## Description

La présente invention a pour objet un procédé d'affichage d'images auto-stéréoscopiques sur un écran disposé avec sa plus grande dimension dans le sens vertical, c'est-à-dire un écran classique pivoté de 90°.

L'autostéréoscopie est une technique permettant l'affichage d'images en relief sans exiger le port de lunettes spéciales de la part des spectateurs. Cette technique est connue par elle-même, en particulier des documents WO 94/26072, WO 00/10332 et WO 2006/024764 du présent inventeur. Le document EP0829743 divulgue un procédé d'affichage auto-stéréoscopique d'une image auto-stéréoscopique à N points de vue de rang compris entre 1 et N, avec N supérieur ou égal à 4, sur un écran, agencé derrière un dispositif sélecteur constitué par un réseau de lenticules cylindriques ou une barrière de parallaxe, présentant des pixels agencés en lignes et en colonnes, lesdits pixels étant composés d'une pluralité de sous-pixels de couleurs différentes, de sorte que les sous-pixels composant chaque pixel sont agencés en colonne dans ledit sens vertical, chaque colonne de l'écran est remplie par des blocs d'au moins 3 sous-pixels formant un pixel et correspondant à un ensemble de sous-pixels d'un des points de vue de l'image à afficher, et lesdits blocs de sous-pixels étant séparés par des blocs d'un ou plusieurs sous-pixels éteints ou assombris.

Une image autostéréoscopique est constituée par une pluralité d'images « élémentaires » imbriquées, correspondant à des vues d'un même objet ou d'une même scène selon des points de vue différents. Un dispositif sélecteur, typiquement constitué par un réseau de lenticules cylindriques ou une barrière de parallaxe disposé devant l'écran d'affichage. Généralement, afin d'éviter l'apparition de certains artefacts, les lenticules cylindriques présentent un axe incliné d'environ 18° par rapport à la direction des colonnes de pixels de l'écran.

Les écrans verticaux (format portrait) sont un atout pour les applications de publicité sur les points de vente (PLV), car la place est rare, les surfaces d'affichage souhaitées doivent être importantes et certains sujets ne se prêtent pas au format horizontal classique. Les boissons ou les parfums (bouteilles et flacons), la coiffure et les produits de beauté (portraits de mannequins), la mode (verticalité du corps) etc., sont naturellement mieux mis en valeur avec ce format.

Les écrans verticaux sont en fait généralement des écrans horizontaux tournés de 90°. Or, la structure de la plupart des écrans est non-symétrique, ou anisotrope, ce qui rend problématique la mise en oeuvre de l'auto-stéréoscopie sur des écrans tournés, ou verticaux.

En effet, le pixel (« picture element », ou élément d'image) n'est pas une structure simple. Il est, sur la majorité des écrans, constitué de trois sous-parties complexes, les sub-pixels, chacune en charge d'une des trois couleurs de base (Rouge, Vert ou Bleu). Certains écrans comportent plus de trois couleurs, mais le principe reste le même. Constitués, dans leur forme la plus simple, de petits rectangles trois fois plus grands verticalement qu'horizontalement, les sub-pixels forment, ensemble et juxtaposés horizontalement, un pixel carré.

Lorsque l'on tourne un écran à 90°, la rotation des sub-pixels modifie l'apparence du pixel qui est désormais formé d'un carré constitué de trois rectangles de couleur superposés. Ainsi, la plus petite entité affichable dans ce contexte, pris horizontalement (l'axe des yeux), n'est plus le sub-pixel (composante colorée rouge R, vert V ou bleu B), mais un pixel entier qui est trois fois plus large. L'espace entre deux pixels contigus horizontalement (formant, avant rotation de l'écran, l'inter ligne), souvent de teinte noire pour améliorer le contraste de l'image, est désormais à prendre en compte, contribuant à la densité de l'ensemble. Il n'est pas suffisamment important pour permettre l'utilisation de composants optiques (réseau lenticulaire, réseau de parallaxe) lors de la transformation de l'écran plat en écran relief sans perte de pouvoir séparateur.

Il faut considérer le réseau lenticulaire ou la barrière de parallaxe, ou tout autre système sélecteur équivalent (ci-après, le « composant optique »), comme une ligne qui doit relier entre eux des sub-pixels appartenant à un même point de vue mais, à des lignes et des colonnes différentes de l'écran, sur toute la hauteur de l'image, en évitant dans la mesure du possible les pixels voisins appartenant aux autres points de vue. Pour un nombre de points de vue donné, si le composant optique doit se conformer à un pixel trois fois plus large, alors son pas devient trois fois plus grand. C'est le cas d'un réseau optique disposé verticalement avec des points de vue représentés par des colonnes entières, verticales d'un pixel de large pour toute la hauteur de l'image. La structure de l'image vue au travers du composant optique est peu agréable, avec des contours en forme de marche d'escalier particulièrement disgracieux.

Dans ce contexte, le grossissement des pixels et des sub-pixels qui le composent par des lentilles verticales, trois fois plus grosses, les rend très visibles et l'ensemble n'est plus de bonne qualité.

Ces considérations restent valables quand les sub-pixels présentent une forme plus complexe (ellipse, chevron...), à condition que les sub-pixels d'un même pixel soient disposés côte à côte lorsque l'écran est orienté avec sa plus grande dimension dans la direction horizontale (format paysage).

L'invention vise à résoudre ce problème et à permettre un affichage auto-stéréoscopique de meilleure qualité visuelle sur un écran vertical, ou en format portrait. Conformément à l'invention, ce résultat est atteint en éteignant (ou en assombrissant considérablement - au moins d'un facteur 10) certains sub-pixels de l'écran.

Ainsi, un objet de l'invention est un procédé d'affichage auto-stéréoscopique d'une image auto-stéréoscopique à N points de vue de rang compris entre 1 et N - dans un ordre croissant de la gauche vers la droite - sur un écran présentant des pixels agencés en lignes et en colonnes, lesdits pixels étant composés d'une pluralité de sub-pixels de couleurs différentes (R, V, B), caractérisé en ce que ledit écran est disposé avec sa plus grande dimension dans le sens vertical de sorte que les sub-pixels composant chaque pixel sont agencés dans ledit sens vertical, et en ce que chaque colonne de l'écran est remplie par des blocs d'au moins 3 sub-pixels correspondant à un ensemble de sub-pixel d'un des points de vue de l'image à afficher, séparés par des blocs d'un ou plusieurs sub-pixels éteints ou assombris.

Selon différents modes de réalisation de l'invention :
- Lesdits points de vue peuvent être affichés dans un ordre croissant - modulo N - dans le sens des lignes, en partant de la gauche de l'écran, et dans un ordre décroissant - modulo N - dans le sens des colonnes, en partant du haut de l'écran.
- Chaque dit bloc de sub-pixels, correspondant à un ensemble de sub-pixel d'un des points de vue de l'image à afficher, peut comprendre soit trois, soit au moins six sub-pixels ; le nombre de sub-pixels dépend de l'angle formé par le composant optique avec la colonne de sub-pixels. Plus l'angle est proche de la verticale et plus le nombre de sub-pixels devant coder pour un ensemble équivalent provenant d'un des points de vue est important. La limite est atteinte par le parallélisme du composant optique avec les colonnes, dans ce cas l'ensemble des sub-pixels est la colonne elle-même. Ce dernier cas n'est pas pris en compte dans cette demande.
- Un décalage vertical desdits blocs d'un ou plusieurs sub-pixels éteints ou assombris est introduit entre deux colonnes adjacentes dudit écran.
- Ledit décalage vertical peut varier, selon un motif périodique, d'une paire de colonnes adjacentes à une autre.

D'autres caractéristiques, détails et avantages de l'invention ressortiront à la lecture de la description faite en référence aux dessins annexés donnés à titre d'exemple et qui illustrent, respectivement :
- La figure 1, un procédé d'affichage auto-stéréoscopique qui ne relève pas de l'invention ;
- Les figures 2 à 11, différentes variantes de procédés d'affichage auto-stéréoscopique qui ne relèvent pas de l'invention
- Les figures 12 à 37, différentes variantes d'un mode de réalisation de l'invention ; et
- Les figures 38 à 41, différentes variantes d'un mode de réalisation de l'invention.

Sur les figures, Cn - avec C=R, V ou B et n entier compris entre 1 et N - dénote un sub-pixel de couleur « C », correspondant au n^{ème} point de vue. Ainsi, par exemple, R4 est un sub-pixel rouge du 4^{e} point de vue.

On considère la première colonne de l'écran (correspondant, avant rotation, à une ligne) en commençant, par convention, en haut à gauche. Un premier ensemble de M_{A} sub-pixels contigus (M_{A} étant un nombre supérieur ou égal à 3, dont la valeur dépend de la variante de réalisation considérée) de ladite colonne, correspond au premier ensemble de sub-pixels homologues du premier point de vue. Dans le groupe de M_{A} sub-pixels, la séquence RVB est répétée une ou plusieurs fois (avec des répétitions incomplètes si M_{A} n'est pas un multiple entier de 3).

Le composant optique est oblique : les génératrices de chaque lentille cylindrique forment, avec les colonnes de l'écran un angle α (défini conventionnellement en partant du haut à gauche vers le bas à droite par convention, l'autre sens est tout aussi valable et ne dépend que du sens dans lequel on mixe les images au départ). Chaque lentille ne peut, au mieux, croiser la première colonne qu'une fois. Il en est ainsi pour toutes les lentilles du réseau lenticulaire.

Ainsi, pour la première colonne, le premier ensemble de sub-pixels correspondant au point de vue N°1 est suivi d'un ensemble de M_{E}≥1sub-pixels éteints (au moins un sub-pixel) puis le second ensemble de sub-pixels allumés, identiques en nombre au premier, correspond au Nième point de vue. Si N = quatre points de vue, l'ordre d'apparition (du haut vers le bas) des points de vue sera : 1 puis 4, puis 3, puis 2, puis 1 de nouveau et ainsi de suite jusqu'au bas de l'écran. Entre chaque bloc de sub-pixels allumés, il y a un ou plusieurs sub-pixels éteints.

La deuxième colonne de sub-pixels sera bâtie selon le même principe, mais devra commencer par les sub-pixels du point de vue N°2.

La troisième colonne de sub-pixels sera bâtie selon le même principe, mais devra commencer par les sub-pixels du point de vue N°3.

La quatrième colonne de sub-pixels sera bâtie selon le même principe, mais devra commencer par les sub-pixels du point de vue N°4.

La cinquième colonne de sub-pixels sera bâtie selon le même principe, mais devra commencer par les sub-pixels du point de vue N°1 si l'ensemble est constitué de N= 4 points de vue.

Et ainsi de suite.

Ce même système générique est également valable quelque soit le nombre de points de vue considéré, de N=2 à N=9 ou plus. La qualité du résultat ne dépendra que de la résolution initiale de l'écran utilisé. Avec des écrans full HD (1080 colonnes X 1920 lignes) au format 9116ème, 4 ou 5 points de vue semblent un compromis tout à fait acceptable.

Selon un procédé d'affichage auto-stéréoscopique qui ne relève pas de l'invention, l'écran est rempli par les données provenant successivement des différents points de vue, lignes de sub-pixels après lignes de sub-pixels en intercalant une ou plusieurs lignes de sub-pixels « noirs » (éteints ou très assombris) à chaque changement de point de vue dans le sens des colonnes. Dans le sens des lignes, on change de point de vue à chaque changement de colonne. Les sub-pixels affichés selon une même ligne correspondent à la succession des points de vue dans l'ordre croissant de 1 à N de manière « modulo N » et les sub-pixels affichés selon une même colonne sont séparés par au moins un sub-pixel non éclairé et correspondent à la succession des points de vue dans l'ordre décroissant de N à 1 de manière « modulo N ».

Considéré dans le sens des colonnes, le nombre de sub-pixels allumés représentant un ensemble équivalent (c'est-à-dire que les sub-pixels affichés proviennent d'un des points de vue et sont copiés de ce point de vue en considérant un écran de même taille et de même résolution sur lequel serait affiché le point de vue) de sub-pixels d'un des points de vue d'origine pris au même endroit, détermine la hauteur des lignes allumées séparées par les lignes éteintes dont l'épaisseur dépend du nombre de sub-pixels non utilisés. Ainsi, l'angle formé par le réseau lenticulaire va pouvoir varier en fonction de ces deux paramètres associés. Chaque lentille du composant optique doit relier entre eux, colonnes après colonnes, les sub-pixels allumés provenant d'un même point de vue. Son angle dépend donc de la distance, en sub-pixels, à parcourir d'une colonne à la suivante pour rencontrer les sub-pixels correspondant au même point de vue. Plus les lignes allumées sont constituées de nombreux sub-pixels et plus les lignes éteintes aussi, plus l'axe du réseau tend vers la verticale.

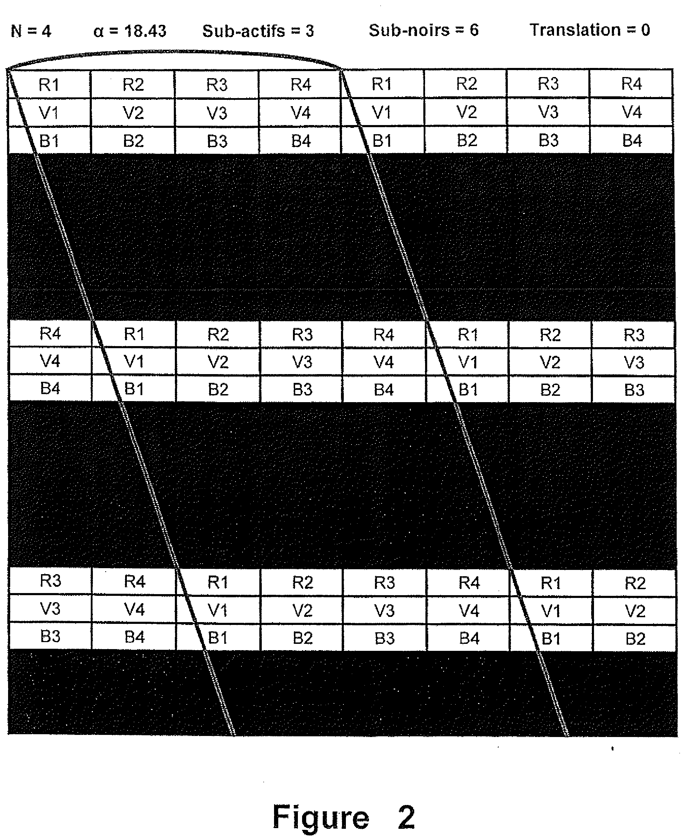

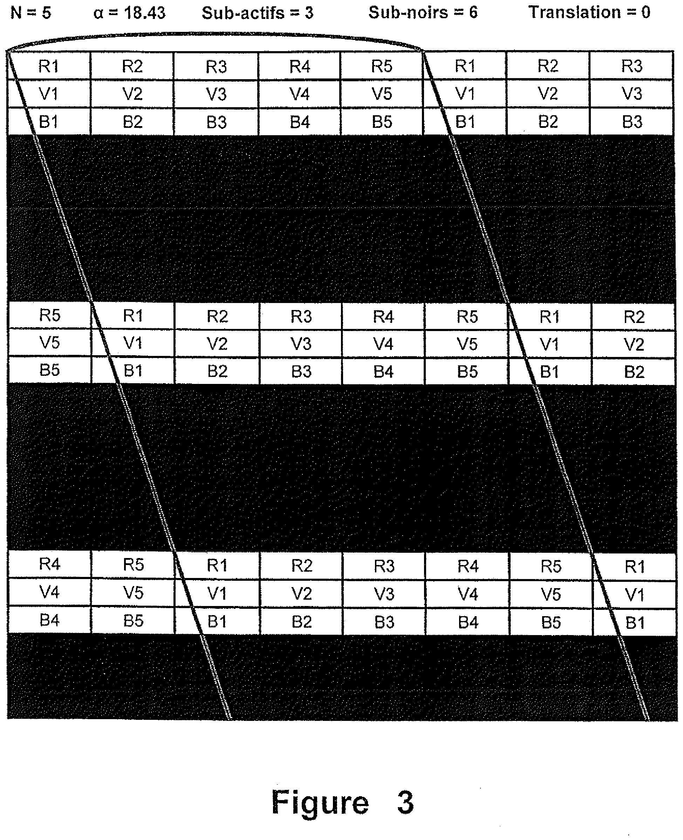

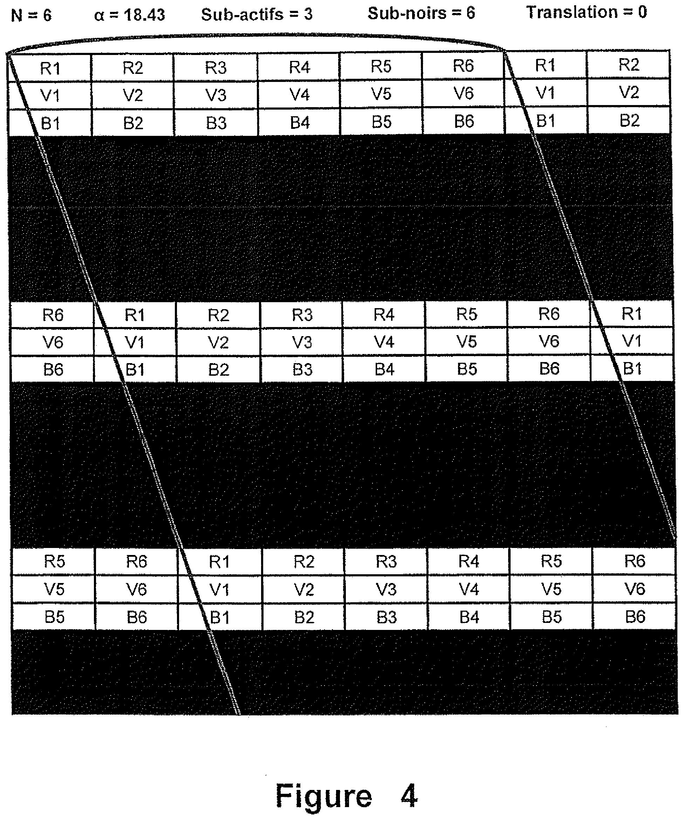

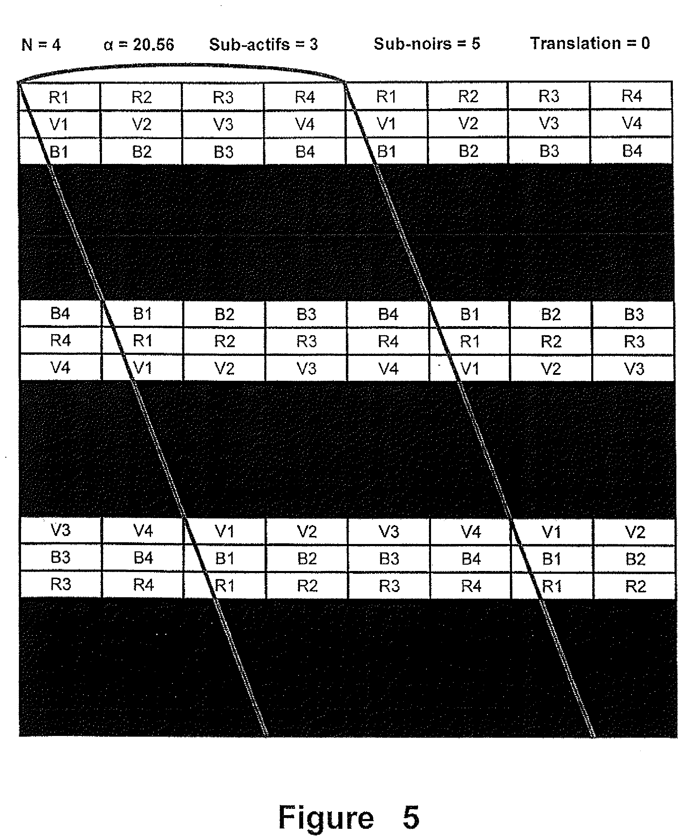

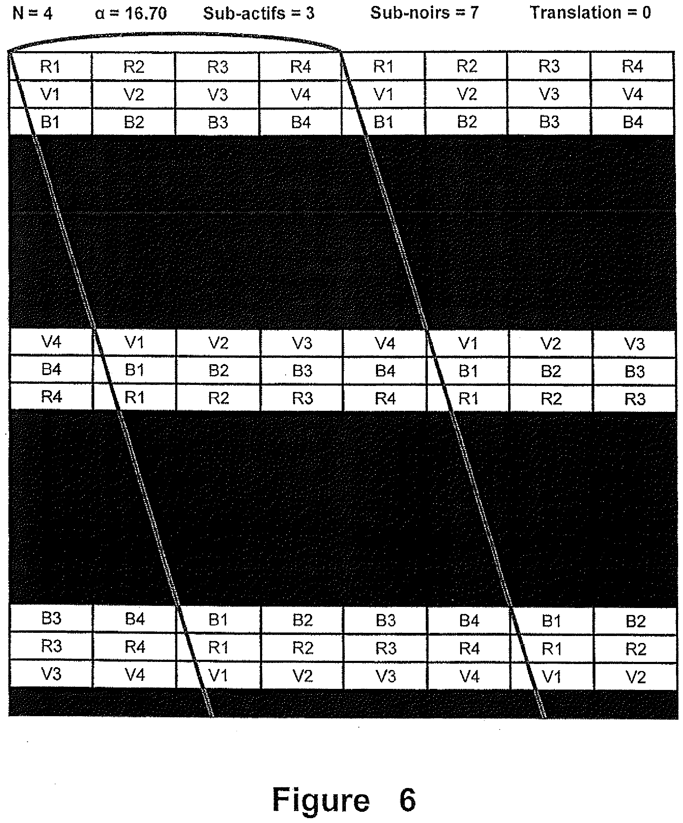

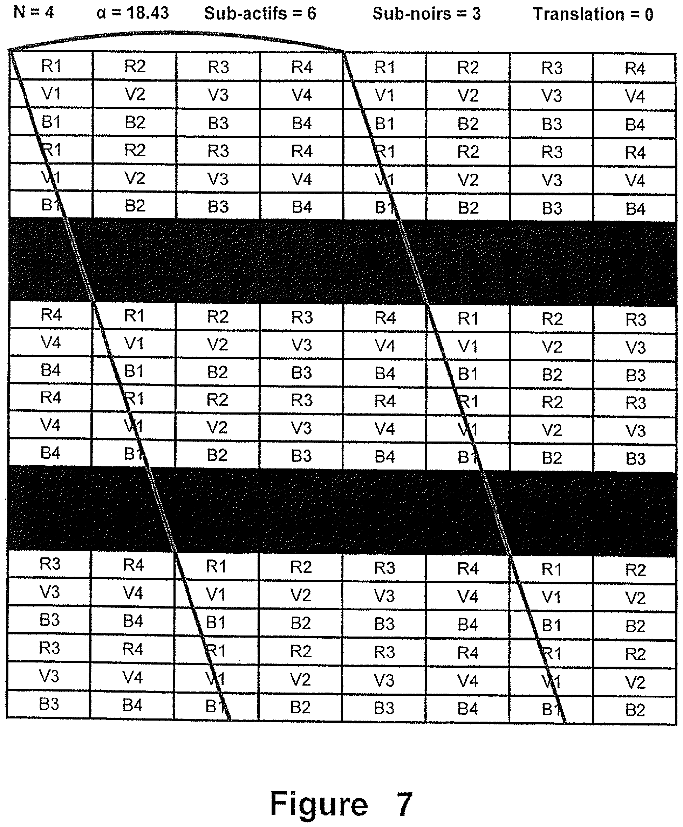

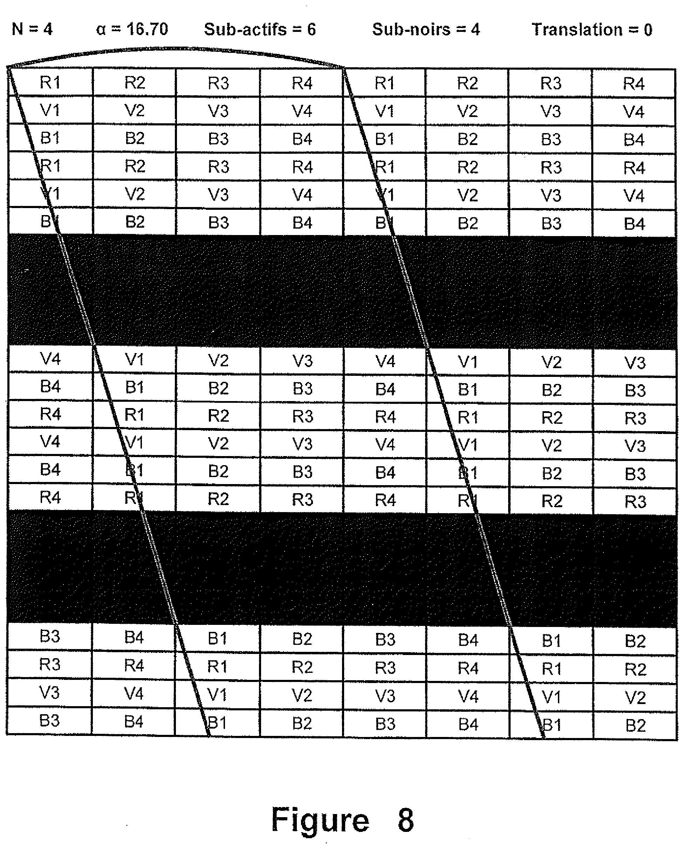

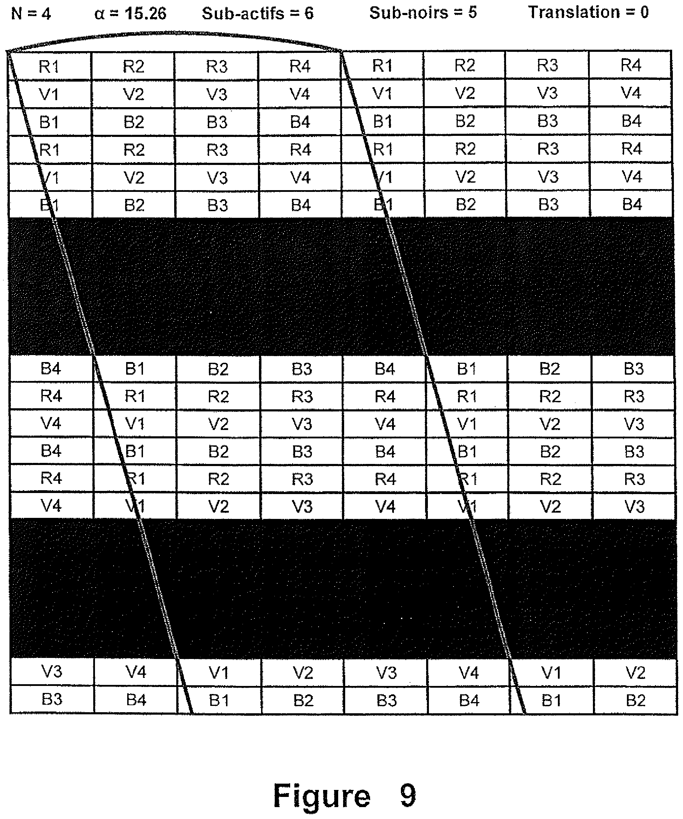

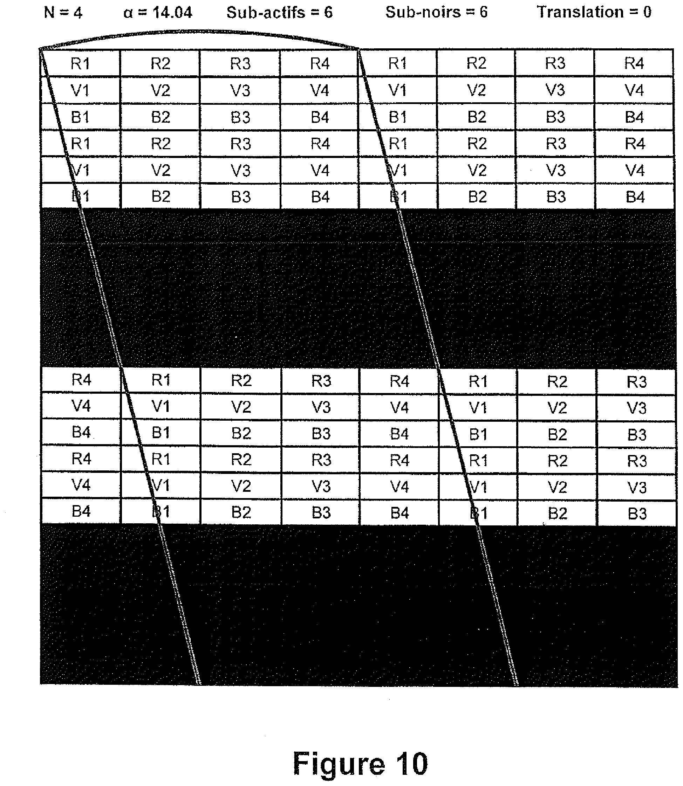

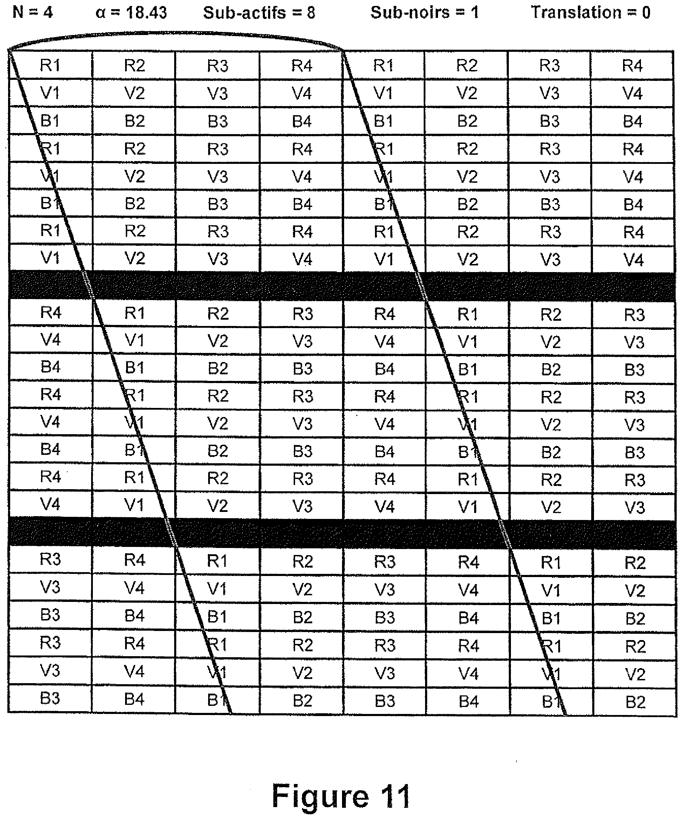

Les figures 2 - 11 illustrent différentes variantes de ce premier procédé d'affichage auto-stéréoscopique qui ne relève pas de l'invention. Plus précisément, les figures 2, 3 et 4 correspondent aux configurations de l'écran pour 4, 5 et 6 points de vue, avec des colonnes constituées par des blocs de 3 sub-pixels actifs pour 6 sub-pixels noirs avec un réseau lenticulaire à α=18,43°. Les figures 5 - 11 correspondent à 4 points de vue, avec différents tailles de blocs de sub-pixels actifs et noirs, et par conséquent différents valeurs de l'angle α.

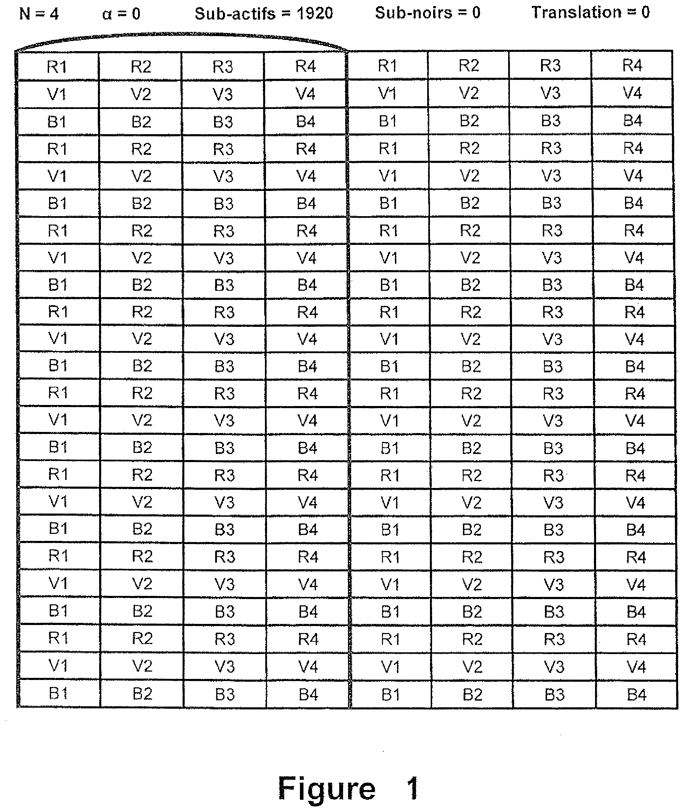

La figure 1 illustre le cas extrême, avec un seul point de vue pour toute la hauteur de l'écran par colonne de sub-pixels, pas de sub-pixels éteints et un réseau lenticulaire parfaitement vertical. Ce cas ne relève pas de l'invention.

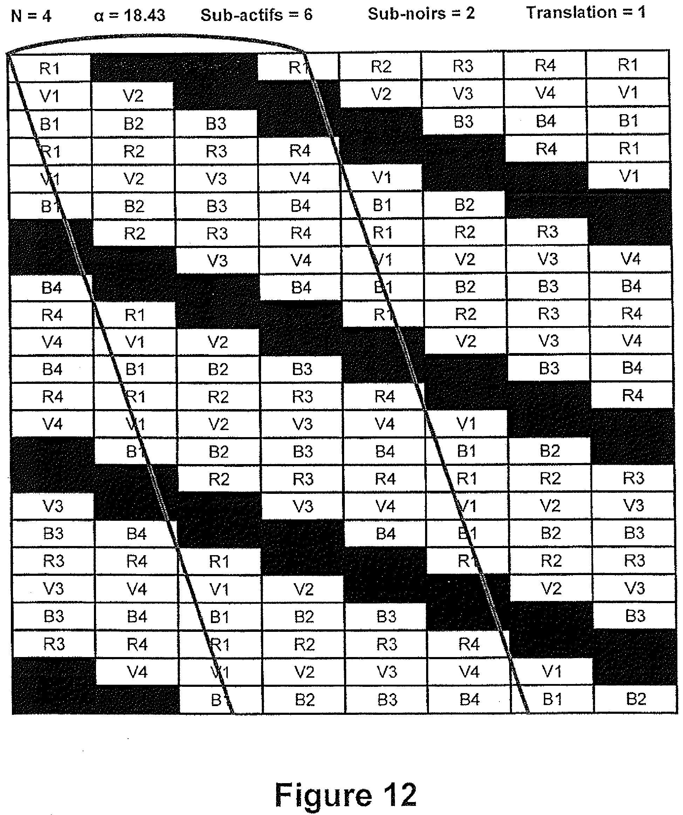

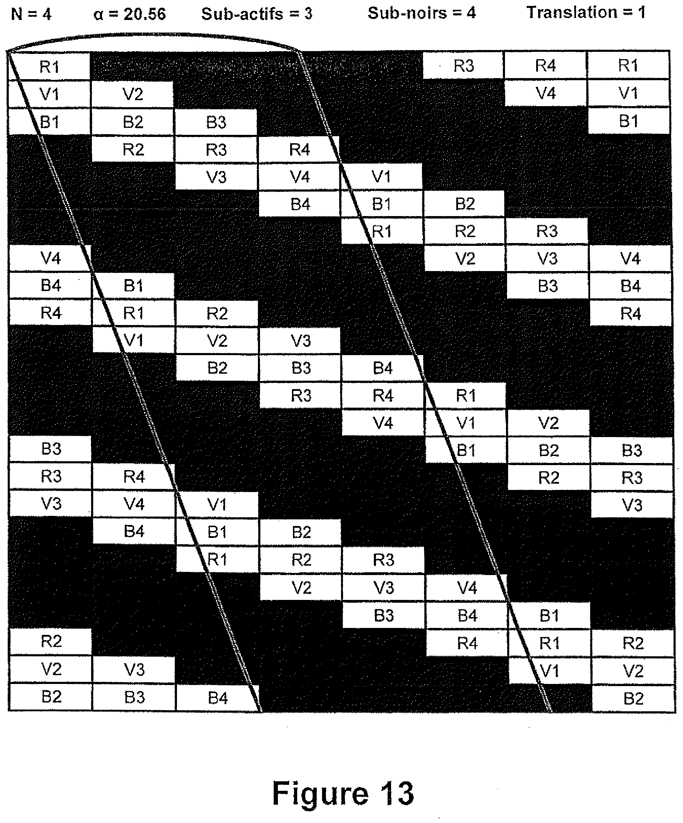

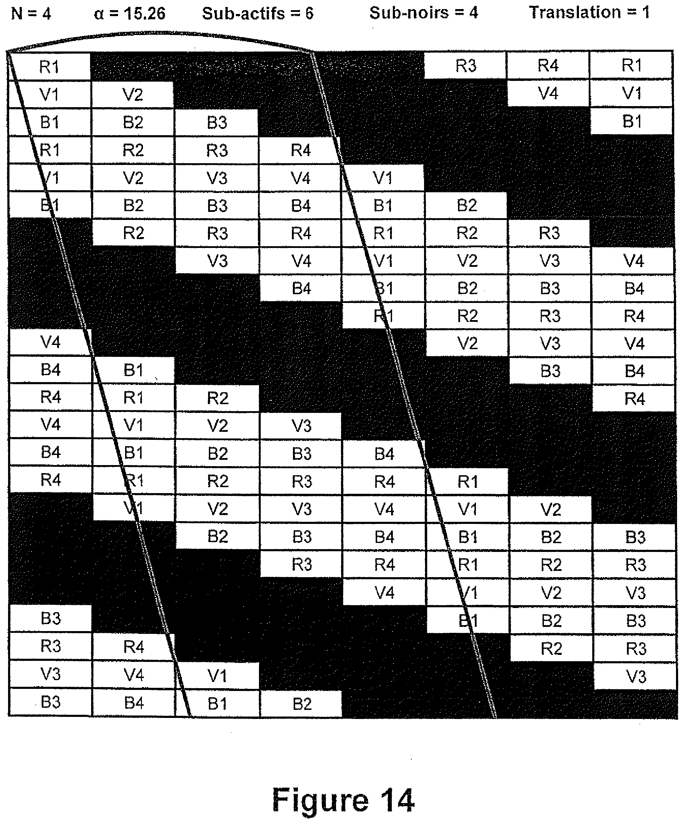

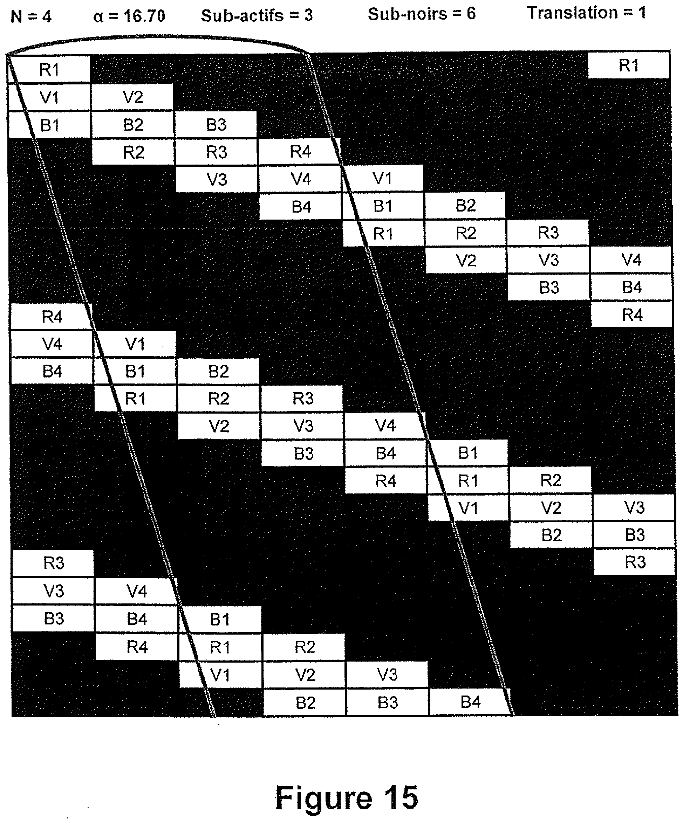

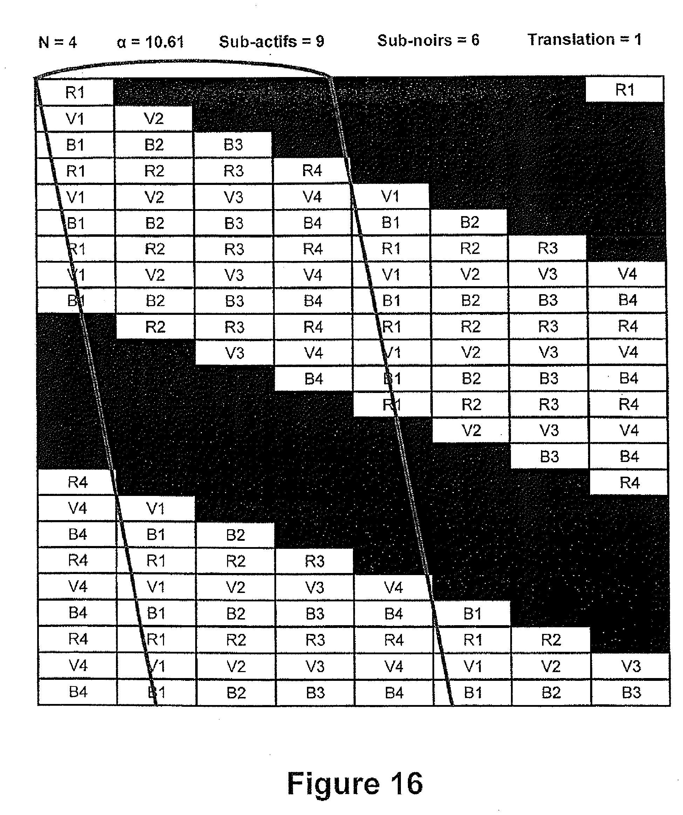

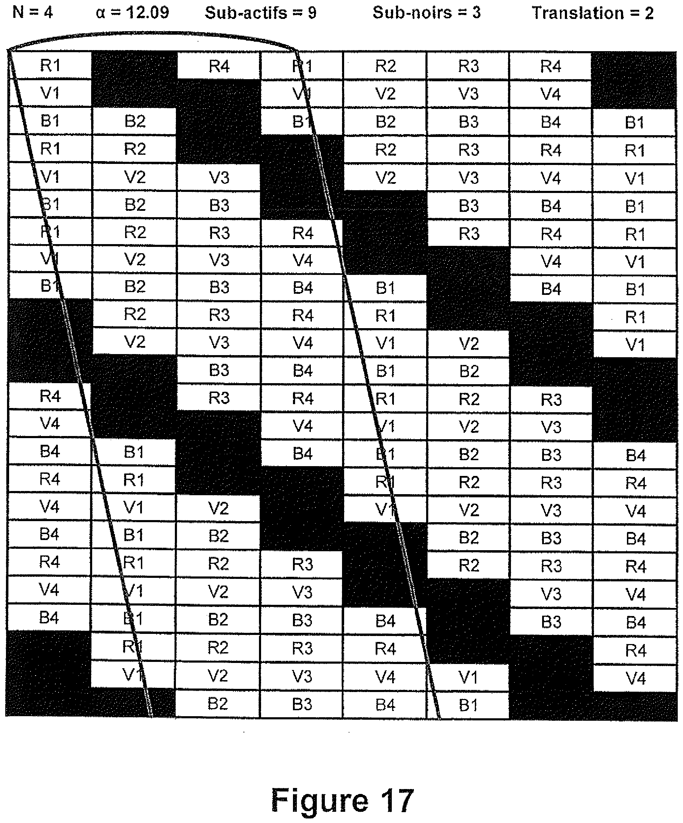

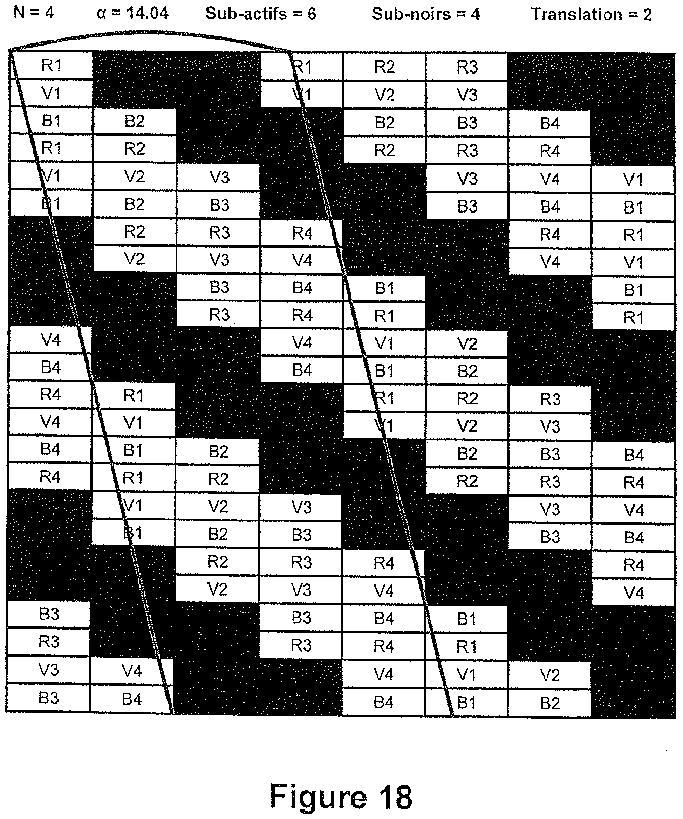

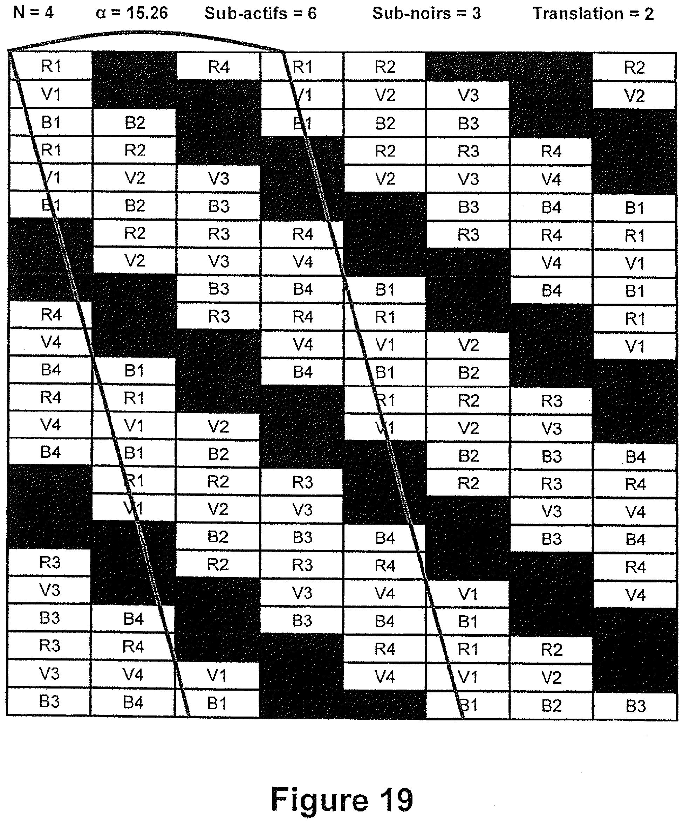

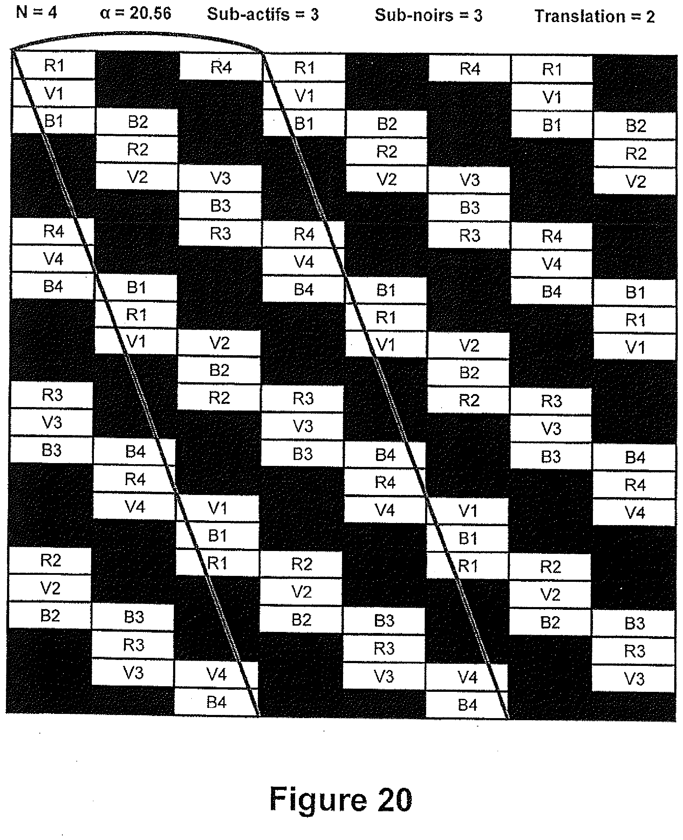

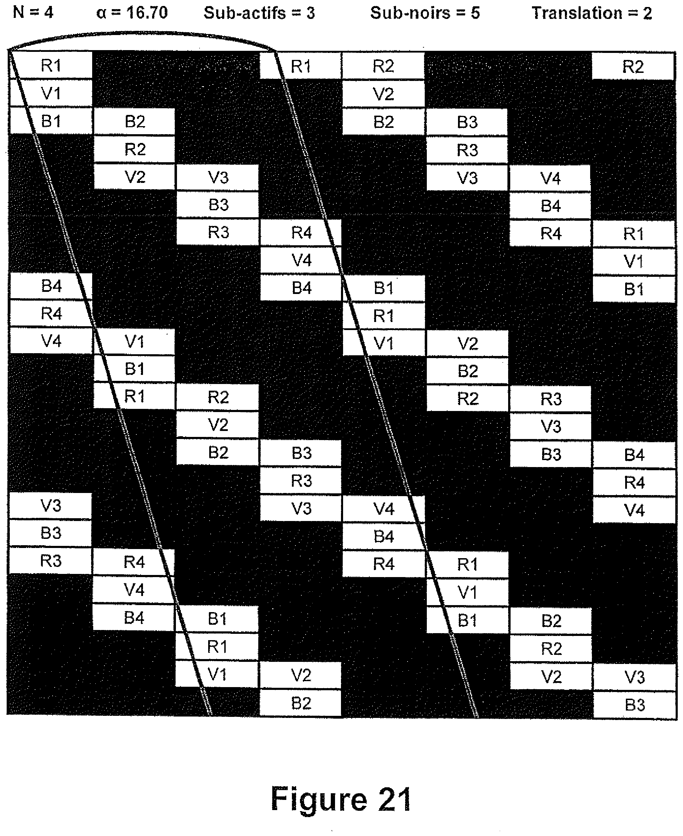

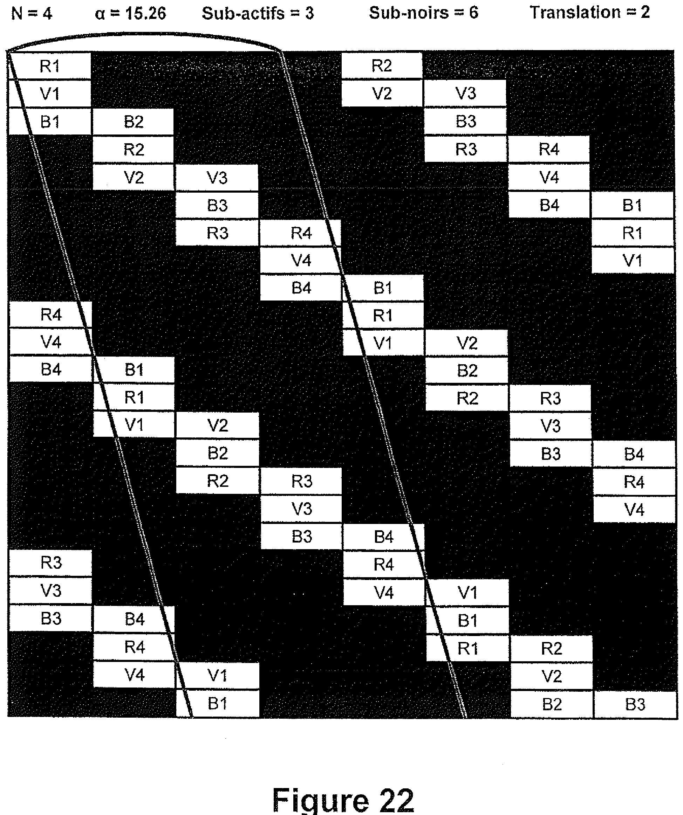

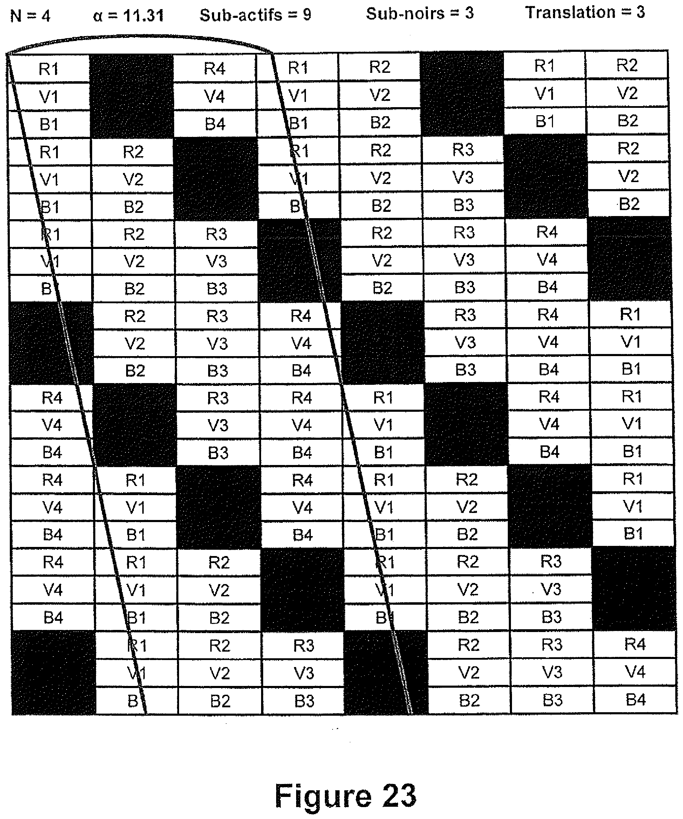

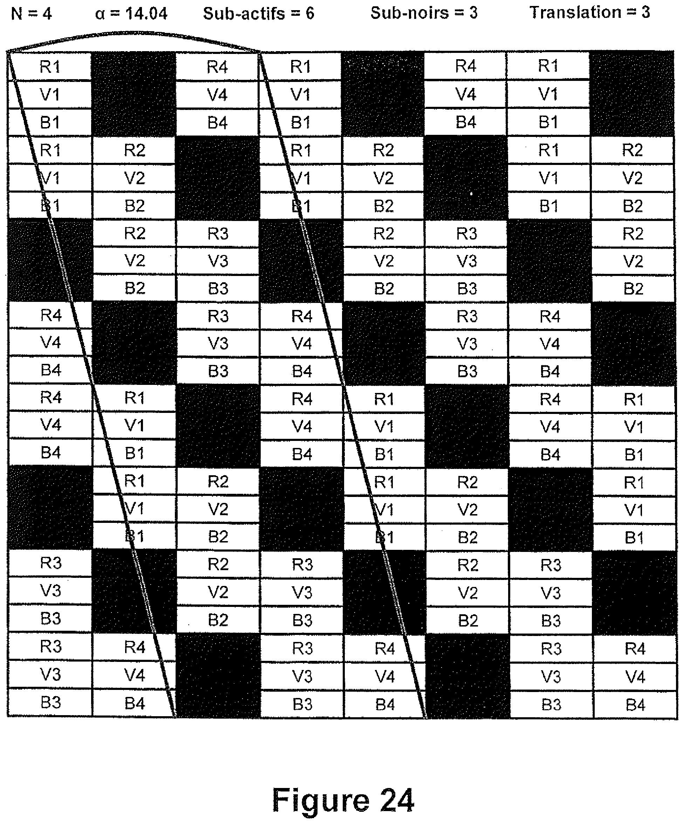

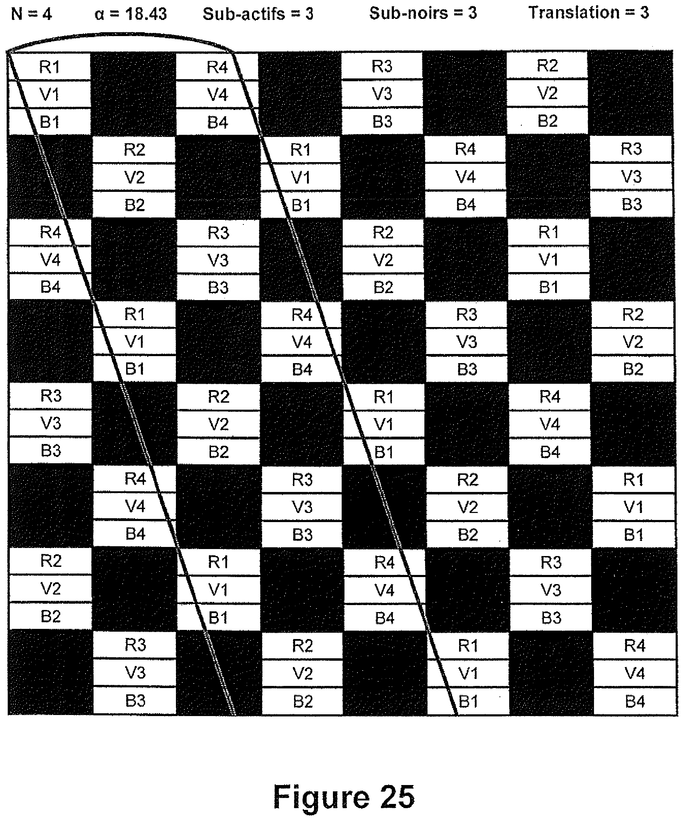

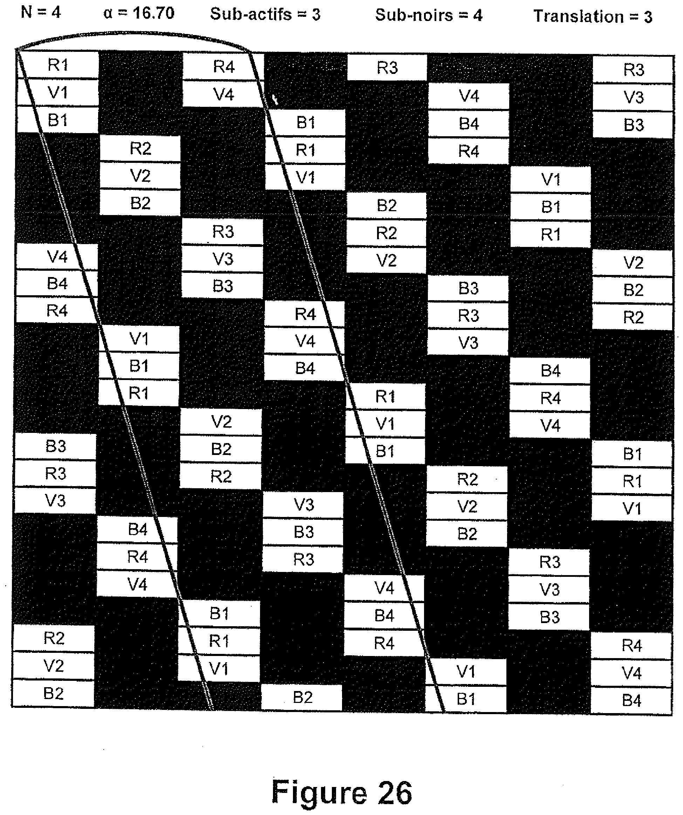

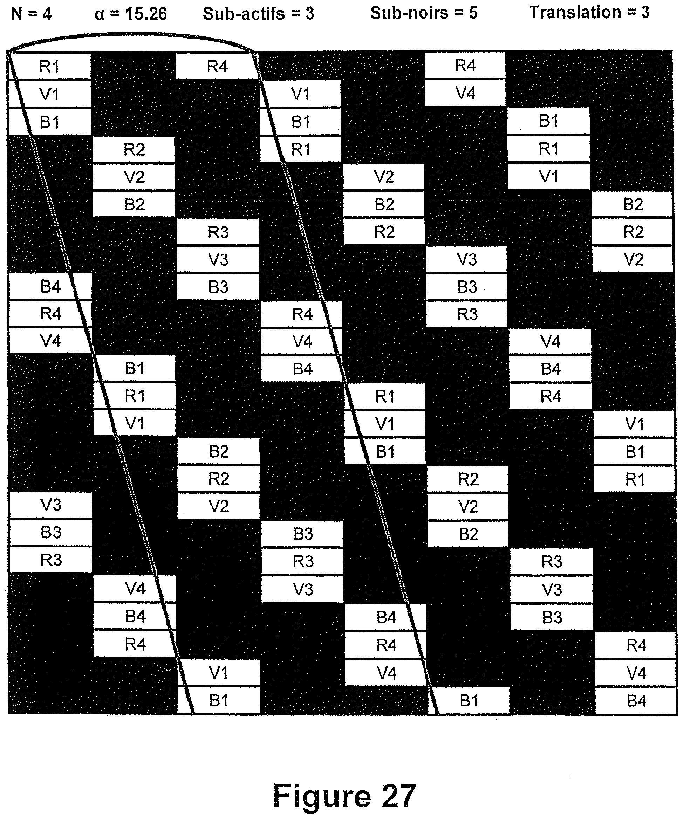

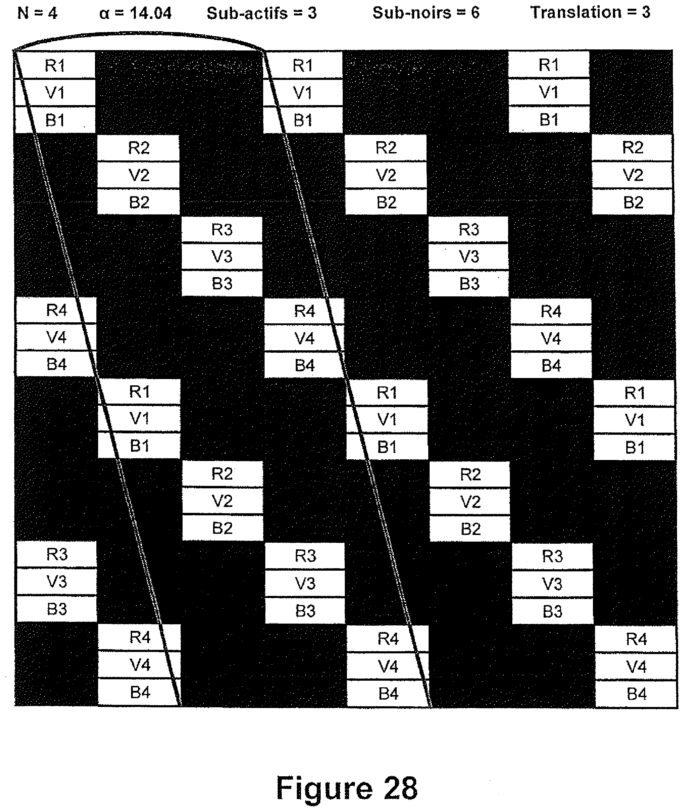

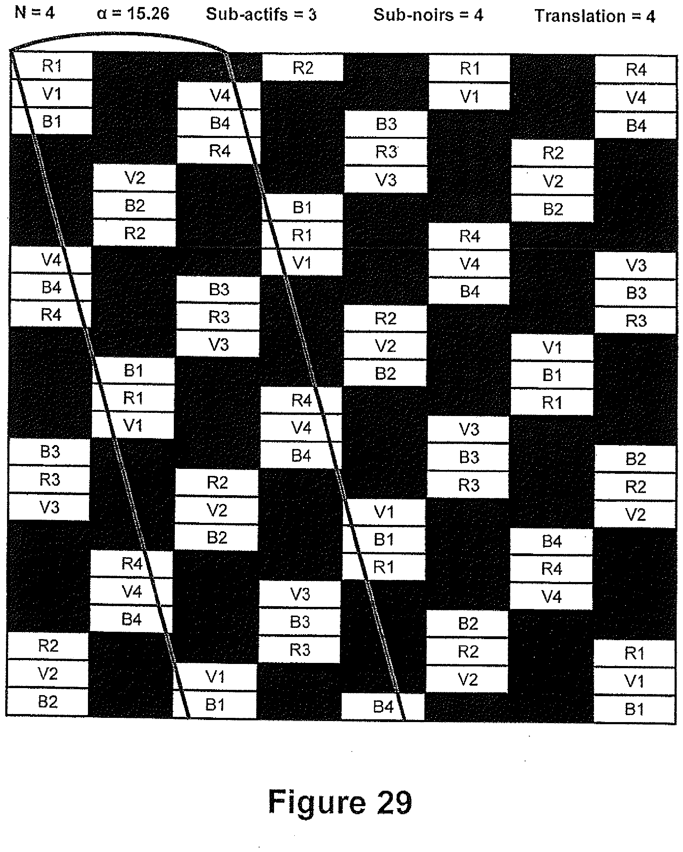

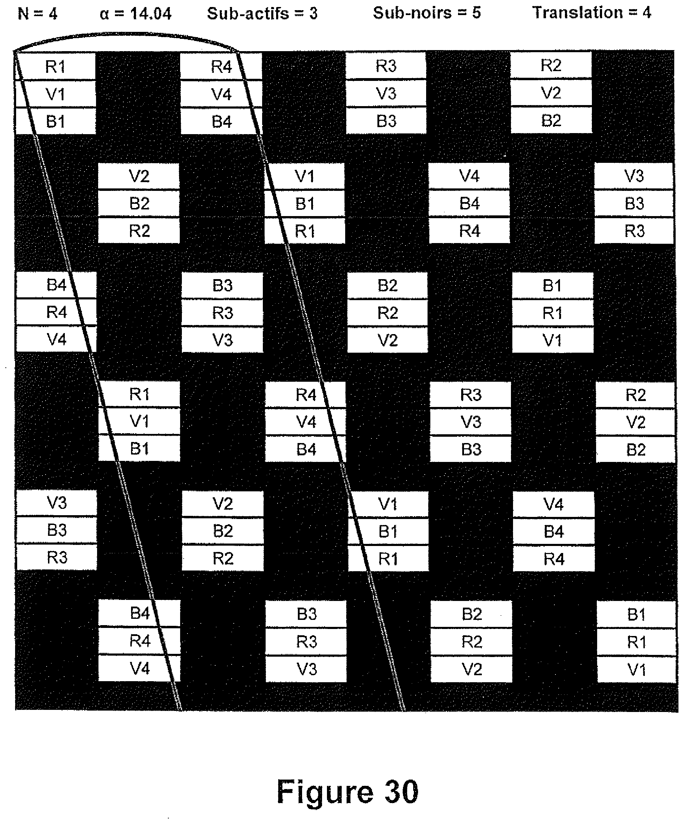

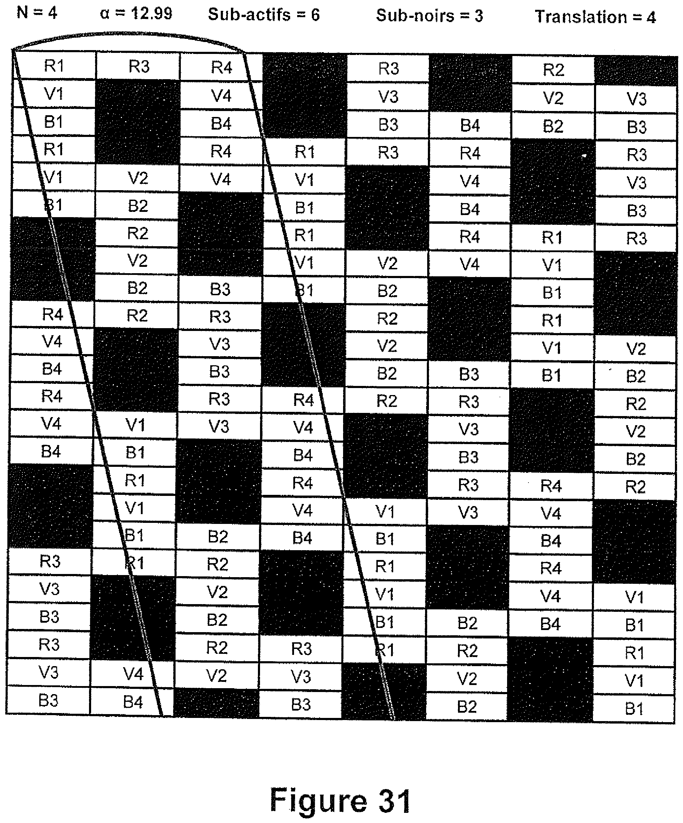

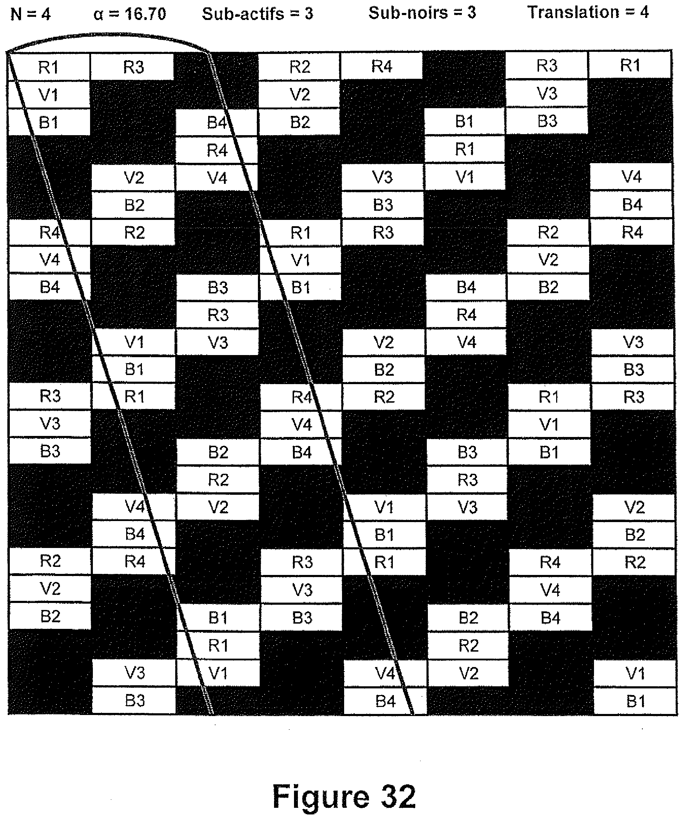

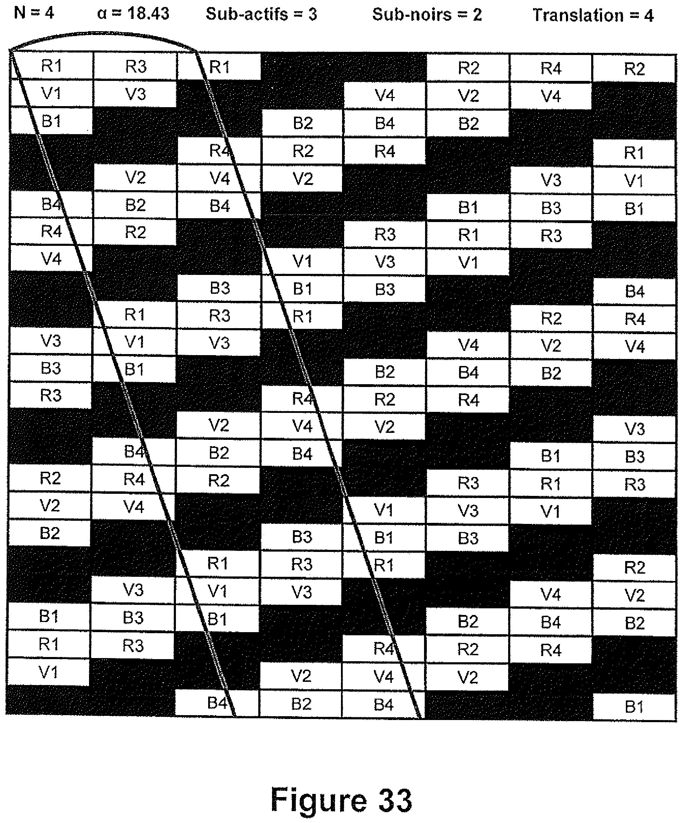

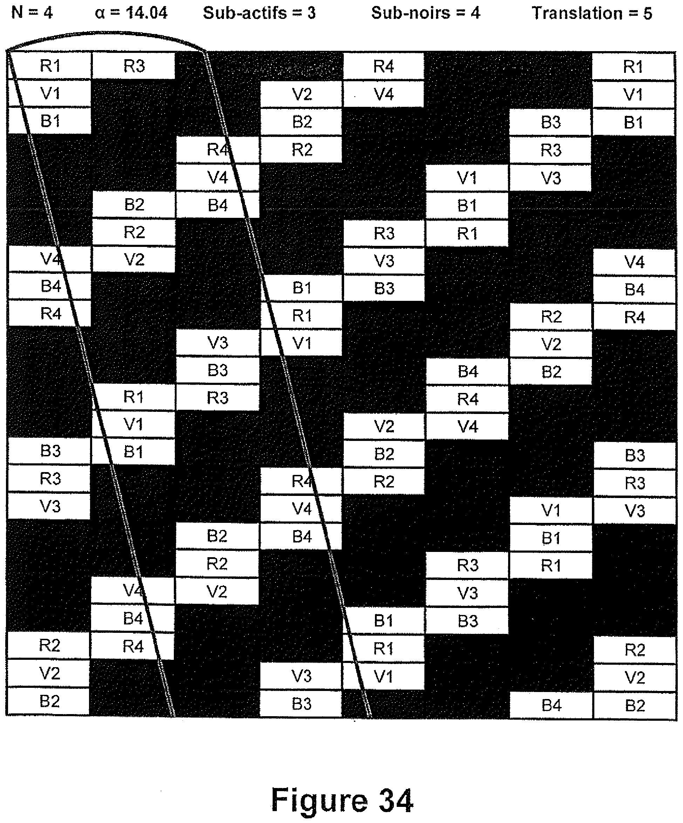

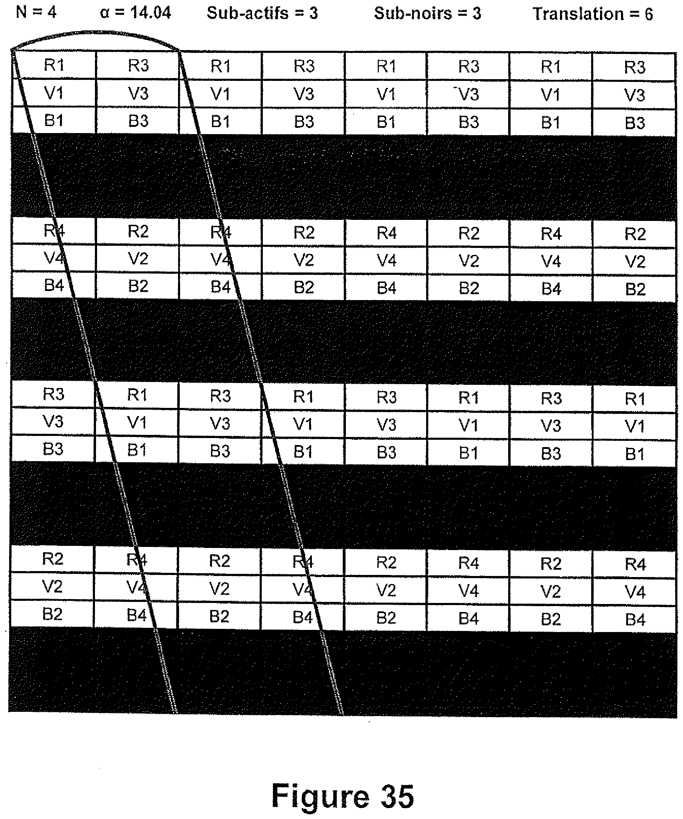

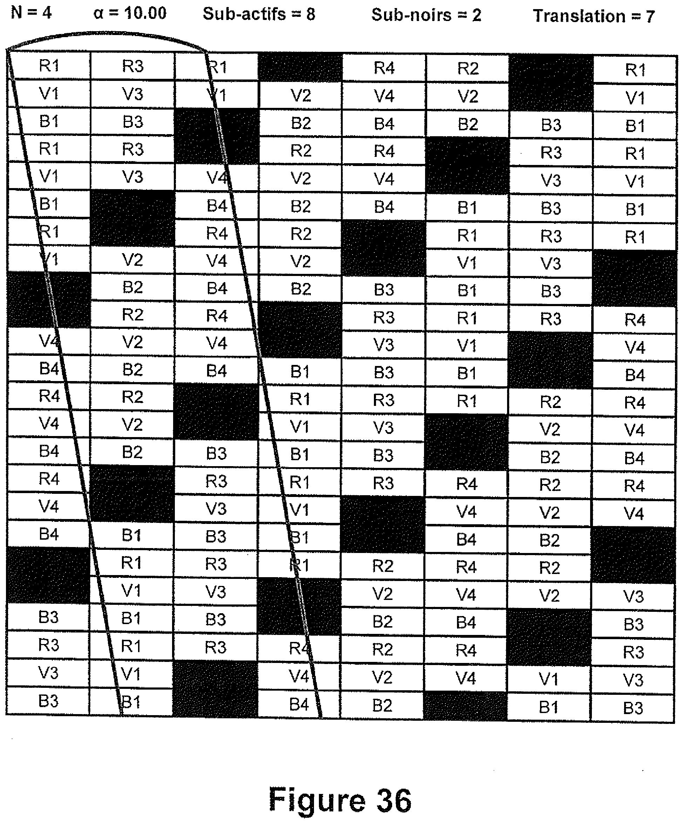

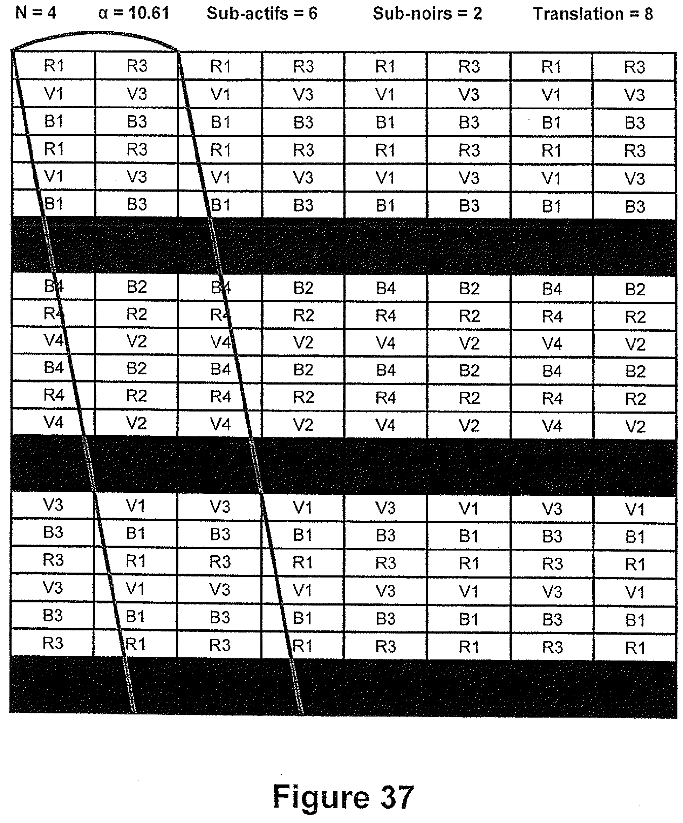

Dans un mode de réalisation de l'invention, un second paramètre intervient pour déterminer l'angle et le pas du réseau lenticulaire : la translation verticale. Dans ce mode de réalisation, chaque colonne fait l'objet d'une translation verticale (plus précisément, c'est le motif formé par les sub-pixels éteints qui est translaté verticalement, la structure de l'écran d'affichage ne peut évidemment pas être changée, c'est donc le motif composé de sub-pixels allumés et de sub-pixels éteints qui doit s'adapter lors de la translation. Si le motif est translaté d'un sub-pixel vers le bas, les sub-pixels provenant de chacun des points de vue sont choisis un sub-pixel plus bas dans les images d'origine, l'ordre et la place des couleurs devant être respectés strictement) afin d'ajuster l'angle du réseau, son pas, et réduire voire faire disparaître les différents artefacts décrits plus avant. Chaque colonne de sub-pixel est constituée sur le même principe et voit se succéder une alternance de sub-pixels allumés ou éteints. Les figures 12 - 37 illustrent différentes variantes de ce mode de réalisation, toutes avec N=4 points de vue.

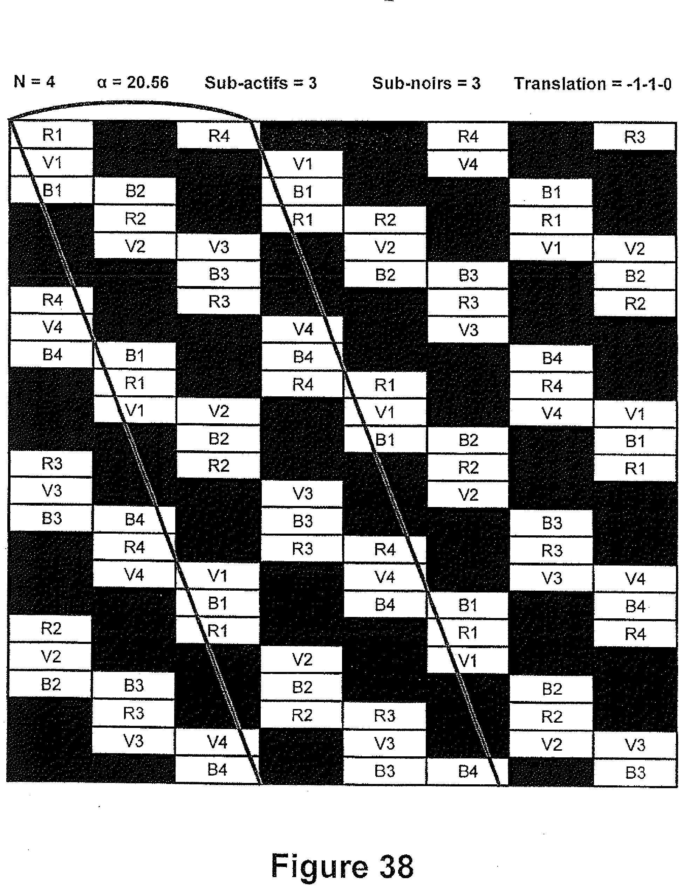

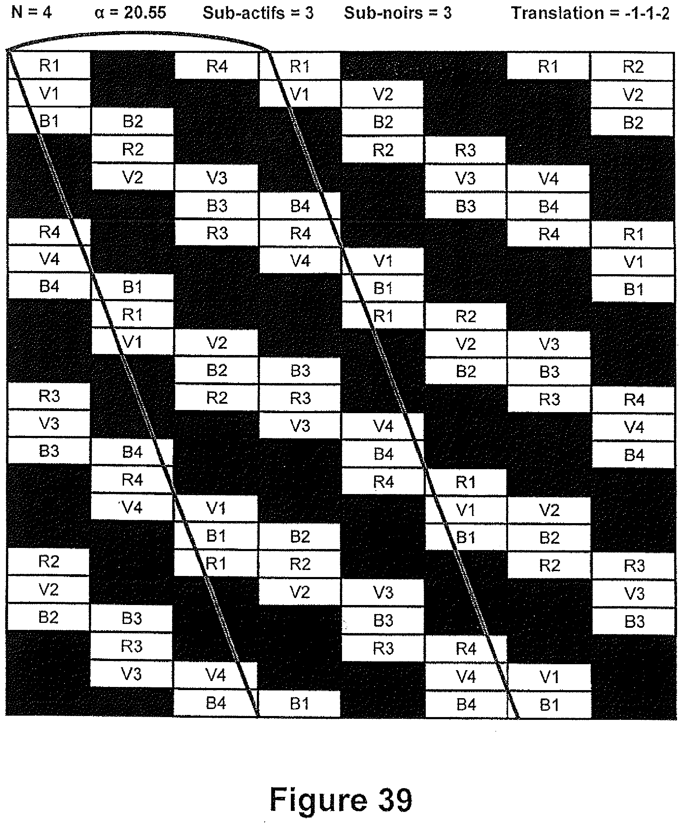

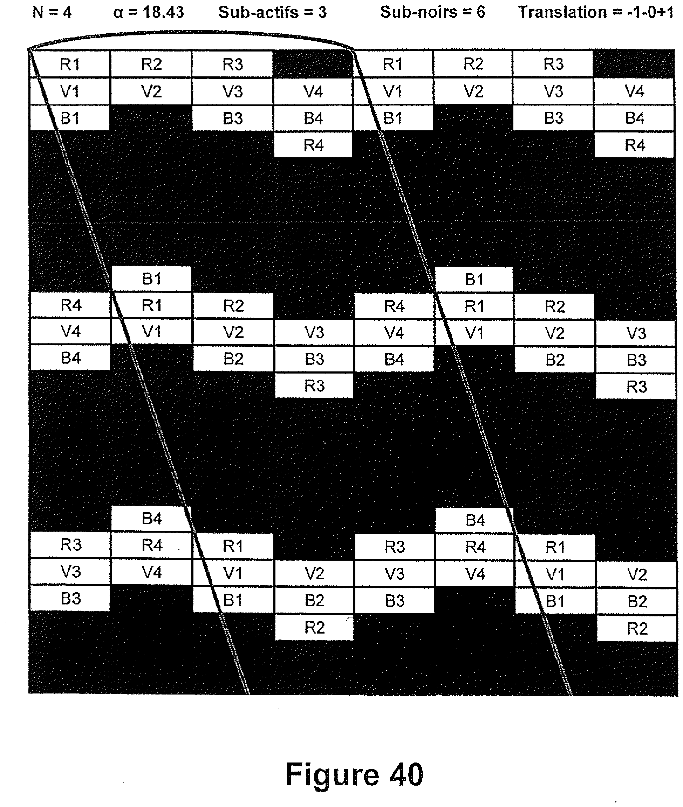

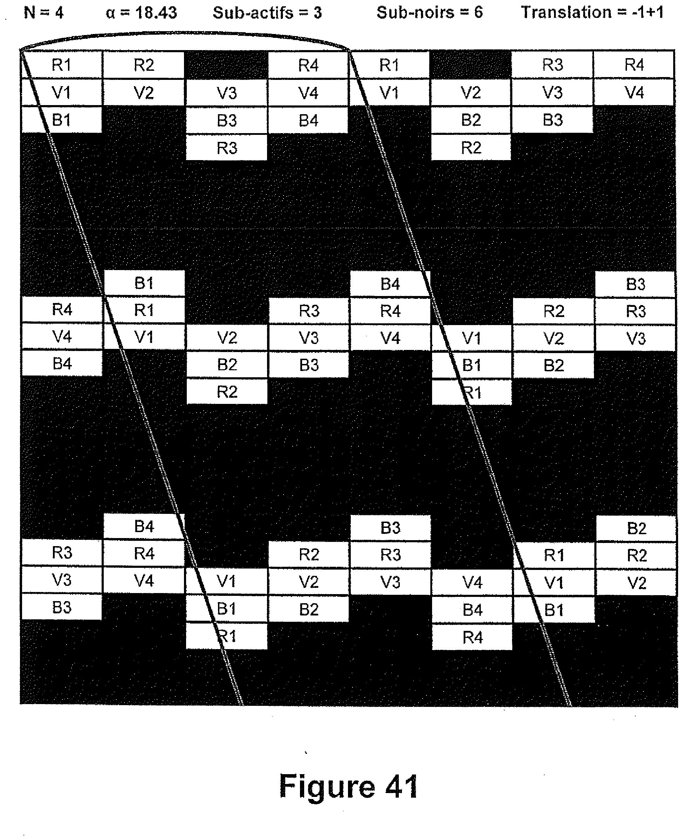

Dans un autre mode de réalisation, différentes colonnes présentent des translations différentes. L'ordre doit rester répétitif et régulier, et la translation choisie pour un ensemble de colonnes adjacentes doit être appliquée aux ensembles suivants, de la même façon. Des permutations circulaires déterminent le N° du pixel et le N° du point de vue d'origine à utiliser pour remplir successivement l'ensemble de l'écran. Différentes variantes de ce mode de réalisation sont illustrées sur les figures 38 à 41.

Le point commun à tous les modes de réalisation consiste à éteindre, ou à fortement assombrir, un certain nombre de sub-pixels de manière régulière, entre les ensembles de sub-pixels correspondant à chacun des points de vue, colonne de pixels après colonne de pixels, et à disposer un composant optique (réseau lenticulaire ou barrière de parallaxe) obliquement pour éviter l'effet d'escalier et minimiser le pas du composant optique.

Le deuxième procédé d'affichage auto-stéréoscopique qui ne relève pas de l'invention, présente cependant un inconvénient résiduel du fait que l'axe optique du réseau lenticulaire ou du réseau de parallaxe est oblique et que la structure du pixel est sensiblement carrée. Ces inconvénients se traduisent par :
- des moirés trop clairs de chevauchement en cas de superposition des points de vue à la transition entre les points de vue.
- ou des moirés sombres, en cas d'absence de pixels le long de l'axe optique sur un petit angle solide correspondant à l'espace inter pixel.
- et/ou des moirés colorés, en cas d'apparition systématique des sub-pixels colorés de façon successive et non simultanée au changement de points de vue lorsque le spectateur se déplace parallèlement au plan de l'écran, sur l'ensemble de l'écran.

Les deux modes de réalisation permettent d'éviter ou réduire ces inconvénients. Pour ajuster la position des données lumineuses nécessaires à la formation des points de vue, en optimisant le pouvoir séparateur et en diminuant ou en éliminant les effets de moirés de luminosité et les moirés colorés, on dispose en effet d'autant de pixels entiers de hauteur que souhaités pour ajuster, au sub-pixel près, l'emplacement des trois composantes R,V ou B jointivement. Le décalage vertical vers le bas d'un sub-pixel, de deux sub-pixels ou de valeur beaucoup plus grande (8 sub-pixels ne constitue pas la limite maximum) est particulièrement avantageux si c'est la colonne entière verticale qui est affectée.

Sans décalage vertical des sub-pixels, colonne après colonne, cette structure de base présente des dominantes colorées aux transitions entre les points de vue, parce que l'axe optique est oblique et que la structure du pixel est sensiblement carrée. Ainsi, l'axe optique reliant le premier ensemble de sub-pixels de la première colonne (représentant une information du point de vue 1) avec le deuxième ensemble de sub-pixels de la deuxième colonne (représentant une autre information du point de vue 1) intersecte la composante rouge du quatrième point de vue (notée R4) ou la composante bleue du deuxième point de vue (notée B2) sur l'ensemble de l'image, d'où une dominante rouge ou bleu au changement de point de vue, puis à l'intersection de la composante verte du quatrième point de vue (notée V4) ou du deuxième point de vue (notée V2) par une dominante R4+V4= Jaune ou B2+V2= Cyan. Ces dominantes colorées disparaissent quand les trois sub-pixels sont intersectés simultanément par l'axe optique.

Avec un décalage vertical des colonnes de pixels, on obtient, colonne après colonne, une permutation circulaire des premiers sub-pixels rencontrés par l'axe optique lorsque le spectateur se déplace horizontalement, ce qui diminue ou élimine les dominantes colorées. Cette disposition a également pour avantage de modifier la position relative des sub-pixels non éclairés ce qui permet d'éviter, au moins en partie, les moirés de luminosité en équilibrant l'espace nécessaire à un bon pouvoir séparateur, considéré perpendiculairement à l'axe optique.

Par ce mécanisme, on peut utiliser un pas du réseau lenticulaire (ou de la barrière de parallaxe) inférieur à N fois le pixel (N étant le nombre de points de vue).

Plus il y a de sub-pixels éteints entre chaque ensemble de sub-pixels allumés, plus l'écran perd de sa luminosité. Ceci n'est cependant pas très perceptible, en particulier si l'on compense cette perte de luminosité par l'utilisation d'un écran haute brillance.

Le tableau ci-après récapitule les configurations illustrées par les différentes figures. « N » est le nombre de point de vue, « α » l'angle formé par le composant optique par rapport à la verticale, « Sub-actifs » la taille d'un bloc de sub-pixels consécutifs utilisés, « Sub-noirs » la taille d'un bloc de sub-pixels consécutifs éteints, « Translation » la translation verticale des blocs de sub-pixels éteints (positif : vers le bas, négatif : vers le haut).

| **Figure** | **Mode de réalisation** | **N** | α | **Sub-actifs** | **Sub-noirs** | **Translation** |
|---|---|---|---|---|---|---|
| 1 | - | 4 | 0° | 5760 | 0 | 0 |
| 2 | 1 | 4 | 18,43° | 3 | 6 | 0 |
| 3 | 1 | 5 | 18,43° | 3 | 6 | 0 |
| 4 | 1 | 6 | 18,43° | 3 | 6 | 0 |
| 5 | 1 | 4 | 20,56° | 3 | 5 | 0 |
| 6 | 1 | 4 | 16,70° | 3 | 7 | 0 |
| 7 | 1 | 4 | 18,43° | 6 | 3 | 0 |
| 8 | 1 | 4 | 16,70° | 6 | 4 | 0 |
| 9 | 1 | 4 | 15,26° | 6 | 5 | 0 |
| 10 | 1 | 4 | 14,04° | 6 | 6 | 0 |
| 11 | 1 | 4 | 18,43° | 8 | 1 | 0 |
| 12 | 2 | 4 | 18,43° | 6 | 2 | 1 |
| 13 | 2 | 4 | 20,56° | 3 | 4 | 1 |
| 14 | 2 | 4 | 15,26° | 6 | 4 | 1 |
| 15 | 2 | 4 | 16,70° | 3 | 6 | 1 |
| 16 | 2 | 4 | 10,61° | 9 | 6 | 1 |
| 17 | 2 | 4 | 12,09° | 9 | 3 | 2 |
| 18 | 2 | 4 | 14,04° | 6 | 4 | 2 |
| 19 | 2 | 4 | 15,26° | 6 | 3 | 2 |
| 20 | 2 | 4 | 20,56° | 3 | 3 | 2 |
| 21 | 2 | 4 | 16,70° | 3 | 5 | 2 |
| 22 | 2 | 4 | 15,26° | 3 | 6 | 2 |
| 23 | 2 | 4 | 11,31° | 9 | 3 | 3 |
| 24 | 2 | 4 | 14,04° | 6 | 3 | 3 |
| 25 | 2 | 4 | 18,43° | 3 | 3 | 3 |
| 26 | 2 | 4 | 16,70° | 3 | 4 | 3 |
| 27 | 2 | 4 | 15,26° | 3 | 5 | 3 |
| 28 | 2 | 4 | 14,04° | 3 | 6 | 3 |
| 29 | 2 | 4 | 15,26° | 3 | 4 | 4 |
| 30 | 2 | 4 | 14,04° | 3 | 5 | 4 |
| 31 | 2 | 4 | 12,99° | 6 | 3 | 4 |
| 32 | 2 | 4 | 16,70° | 3 | 3 | 4 |
| 33 | 2 | 4 | 18,43° | 3 | 2 | 4 |
| 34 | 2 | 4 | 14,04° | 3 | 4 | 5 |
| 35 | 2 | 4 | 14,04° | 3 | 3 | 6 |
| 36 | 2 | 4 | 10,00° | 8 | 2 | 7 |
| 37 | 2 | 4 | 10,61° | 6 | 2 | 8 |
| 38 | 3 | 4 | 20,56° | 3 | 3 | -1,-1,0 |
| 39 | 3 | 4 | 20,55° | 3 | 3 | -1,-1,-2 |
| 40 | 3 | 4 | 18,43° | 3 | 6 | -1,0,+1 |
| 41 | 3 | 4 | 18,43° | 3 | 6 | -1,1 |

## Revendications

1. Procédé d'affichage autostéréoscopique d'une image autostéréoscopique à N points de vue de rang compris entre 1 et N, avec N supérieur ou égal à 4, - dans un ordre croissant de la gauche vers la droite - sur un écran, agencé derrière un dispositif sélecteur constitué par un réseau de lenticules cylindriques ou une barrière de parallaxe, présentant des pixels agencés en lignes et en colonnes, lesdits pixels étant composés d'une pluralité de sous-pixels de couleurs différentes, dans lequel:
- ledit écran est disposé avec sa plus grande dimension dans le sens vertical de sorte que les sous-pixels composant chaque pixel sont agencés en colonne dans ledit sens vertical,
- chaque colonne de l'écran est remplie par des blocs d'au moins 3 sous-pixels formant un pixel et correspondant à un ensemble de sous-pixels d'un des points de vue de l'image à afficher, chaque colonne étant remplie par l'ensemble des points de vue de l'image et lesdits blocs de sous-pixels correspondent à chacun des points de vue différents de la colonne étant séparés par des blocs d'un ou plusieurs sous-pixels éteints ou assombris,
- un décalage vertical desdits blocs d'un ou plusieurs sous-pixels éteints ou assombris est introduit, pour obtenir colonne après colonne, pour chaque pixel, une permutation circulaire des premiers sous-pixels rencontrés par ledit dispositif sélecteur,
- l'angle du dispositif sélecteur dépend de la distance, en sous-pixels, à parcourir d'une colonne à la suivante pour rencontrer des sous-pixels correspondant au même point de vue.

2. Procédé d'affichage autostéréoscopique selon la revendication 1, dans lequel lesdits points de vue sont affichés dans un ordre croissant - modulo - dans le sens des lignes, en partant de la gauche de l'écran, et dans un ordre décroissant - modulo N - dans le sens des colonnes, en partant du haut de l'écran.

3. Procédé d'affichage autostéréoscopique selon l'une des revendications précédentes, dans lequel chaque dit bloc de sous-pixels, correspondant à un ensemble de sous-pixel d'un des points de vue de l'image à afficher, comprend soit trois, soit au moins six sous-pixels.

4. Procédé d'affichage autostéréoscopique selon l'une des revendications précédentes dans lequel ledit décalage vertical varie, selon un motif périodique, d'une paire de colonnes adjacentes à une autre.

## Patentansprüche

1. Verfahren zur autostereoskopischen Anzeige eines autostereoskopischen Bildes mit N Blickpunkten vom Rang zwischen 1 und N, wobei N größer oder gleich 4 ist, in aufsteigender Reihenfolge von links nach rechts auf einem Bildschirm, der hinter einer Auswahlvorrichtung angeordnet ist, die aus einem Netz von zylindrischen Linsen oder einer Parallaxenbarriere besteht, mit in Zeilen und Spalten angeordneten Pixeln, worin die Pixel aus mehreren Unterpixeln verschiedener Farben zusammengesetzt sind:
worin der Bildschirm mit seiner größten Ausdehnung in vertikaler Richtung angeordnet ist, so dass die Unterpixel, aus denen jedes Pixel besteht, in Spalten in dieser vertikalen Richtung angeordnet sind,
worin jede Spalte des Bildschirms mit Blöcken von mindestens 3 Subpixeln gefüllt ist, die ein Pixel bilden und einem Satz von Subpixeln einem der Blickpunkte des anzuzeigenden Bildes entsprechen, worin jede Spalte mit dem Satz von Blickpunkten des Bildes gefüllt ist und die Blöcke von Subpixeln jedem der verschiedenen Blickpunkte der Spalte entsprechen, die durch Blöcke von einem oder mehreren abgedunkelten Subpixeln getrennt sind;
wobei eine vertikale Verschiebung der Blöcke aus einem oder mehreren abgedunkelten oder ausgelöschten Subpixeln eingeführt wird, um Spalte für Spalte für jedes Pixel eine kreisförmige Permutation der ersten Subpixel zu erhalten, auf die die Auswahlvorrichtung trifft;
wobei der Winkel der Auswahlvorrichtung von der Entfernung in Teilpixeln abhängt, die von einer Spalte zur nächsten zurückzulegen ist, um auf Teilpixel zu treffen, die demselben Blickpunkt entsprechen.

2. Autostereoskopisches Anzeigeverfahren nach Anspruch 1, wobei die Blickpunkte in aufsteigender - modulo - Reihenfolge in der Zeilenrichtung, beginnend vom linken Bildschirmrand, und in absteigender - modulo N - Reihenfolge in der Spaltenrichtung, beginnend vom oberen Bildschirmrand, angezeigt werden.

3. Autostereoskopisches Anzeigeverfahren nach einem der vorstehenden Ansprüche, worin jeder Block von Subpixeln, der einem Satz von Subpixeln einem der Blickpunkte des anzuzeigenden Bildes entspricht, entweder drei oder mindestens sechs Subpixel umfasst.

4. Autostereoskopisches Anzeigeverfahren nach einem der vorstehenden Ansprüche, wobei die vertikale Verschiebung in einem periodischen Muster von einem Paar benachbarter Spalten zu einem anderen variiert.

## Claims

1. A method of autostereoscopic display of an autostereoscopic image with N points of view of rank between 1 and N, with N greater than or equal to 4, - in an ascending order from left to right - on a screen, arranged behind a selector device constituted by an array of cylindrical lenticules or a parallax barrier, having pixels arranged in rows and columns, said pixels being composed of a plurality of subpixels of different colors :
- said screen is arranged with its largest dimension in the vertical direction so that the sub-pixels composing each pixel are arranged in columns in said vertical direction,
- each column of the screen is filled with blocks of at least 3 sub-pixels forming one pixel and corresponding to a set of sub-pixels of one of the viewpoints of the image to be displayed, each column being filled with the set of viewpoints of the image and said blocks of sub-pixels correspond to each of the different viewpoints of the column being separated by blocks of one or more darkened sub-pixels
- a vertical shift of said blocks of one or more darkened or extinguished sub-pixels is introduced, to obtain column after column, for each pixel, a circular permutation of the first sub-pixels encountered by said selector device,
- the angle of the selector device depends on the distance, in sub-pixels, to be covered from one column to the next in order to encounter sub-pixels corresponding to the same viewpoint.

2. The autostereoscopic display method of claim 1, wherein said viewpoints are displayed in ascending order - modulo - in the row direction, starting from the left of the screen, and in descending order - modulo N - in the column direction, starting from the top of the screen.

3. The autostereoscopic display method according to any of the preceding claims, wherein each said block of subpixels, corresponding to a set of subpixels of one of the viewpoints of the image to be displayed, comprises either three or at least six subpixels.

4. The autostereoscopic display method according to any of the preceding claims wherein said vertical shift varies, in a periodic pattern, from one pair of adjacent columns to another.
